# EUROPEAN PATENT APPLICATION

(11) **EP 2 479 597 A2**
(43) Date of publication of application: **25.07.2012**
(21) Application number: 12151810.4
(22) Date of filing: 19.01.2012
(51) Int. Cl.: G02B 7/10

(54) **Lens Barrel, Imaging Apparatus and Electronic Device Using The Lens Barrel**

(30) Priority: 20.01.2011 JP 2011010314
(71) Applicant: Ricoh Company, Ltd., Tokyo 143-8555 (JP)
(72) Inventor: Yamano, Tohru, Tokyo, 143-8555 (JP)
(74) Representative: Forsythe, Dominic

(57) **Abstract**

A lens barrel (LB) that has a plurality of lens groups (11, 12, 13, 15, 16), and becomes a shooting state by moving at least a part of the plurality of the lens groups to an object side from a state of being retracted where at least a part of the plurality of the lens groups is retracted and stored, the lens barrel includes: a plurality of lens holding frames (21, 26, 27, 28, 29) that holds the plurality of lens groups per lens group, respectively; a movable lens cylinder (22, 24) that holds the plurality of the lens holding frames inside; a lens holding frame driver that drives at least a part of the plurality of the lens holding frames via the movable lens cylinder; a guide member (33) that guides at least a part of movement along an optical axis direction of the plurality of the lens groups; a focus lens holding frame (27) that is included in the plurality of the lens holding frames, holds a focus lens system (13) that performs focusing, and is guided by the guide member and moves along the optical axis direction; a focus motor (31) that moves the focus lens system along the optical axis direction; an actuator frame (35) that is guided by the guide member shared by the focus lens holding frame, engages with the focus motor, and is driven along the optical axis direction by an operation of the focus motor; and an urging member (37) that is provided between the focus lens holding frame and the actuator frame, and urges the focus lens holding frame on an image plane side.

## Description

The present invention relates to a so-called retracting type lens barrel suck that at least a part of a plurality of lens groups including at least one lens per lens group is retracted and stored in one state, and at least a part of the plurality of the lens groups is extended to a predetermined position and used in another state. In particular, the present invention relates to a lens barrel suitable for a zoom lens such that the plurality of the lens groups is moved relatively and a focal length is changed, and an imaging apparatus and an electronic device that use such a lens barrel as an optical system for imaging.

As for an imaging apparatus such as a so-called digital camera, or the like, along with achievement of high performance of a shooting lens such as a zoom lens, or the like that is capable of changing a focal length, and development of miniaturization and so on at users' requests, there have been an increasing number of imaging apparatuses using a so-called retracting type shooting lens such that a part or all of the lens barrel is stored inside a body of the imaging apparatus except when photographing. In addition, since there is not just a demand for miniaturization, but also for a further thinner imaging apparatus, it is important to reduce a thickness of a lens barrel part in a state of being retracted and stored to the maximum.
In order to respond to such a demand for making the imaging apparatus thinner, an entire thinner lens barrel is achieved by making a mechanism part driving a focus lens that is a lens group for focusing thinner.
Examples of such conventional retracting type lens constitutions are disclosed in Japanese Patent numbers 3809826 and 4433270, and Japanese Patent Application Publication numbers 2002-162555 and 2008-15119.
In the constitution disclosed in Japanese Patent number 3809826, a focus lens holding frame that holds a focus lens is moved along the direction of an optical axis by screwing of a lead screw and a nut, that is, a female screw. The constitution disclosed in Japanese Patent number 3809826 achieves a thinner lens barrel by shortening the lead screw to the maximum. Therefore, it is necessary to avoid a so-called locked state, when the nut exceeds a limit of movement due to a control error, or the like.

Additionally, in the constitution disclosed in Japanese Patent number 4433270, in order to perform highly-accurate positioning and fixing of a guide shaft that guides a focus lens holding frame in the direction of the optical axis and achieve being thinner, the guide shaft is highly accurately positioned and fixed by a simple constitution.
In the constitution disclosed in Japanese Patent Application Publication number 2002-162555, by using a rack (rack gear) as a member that is engaged with a lead screw and driven, miniaturization is achieved without an urging member to press and contact a focus lens holding frame or a member working therewith with a female screw.
In addition, in the constitution disclosed in Japanese Patent Application Publication number 2008-15119, when being retracted and stored, making the imaging apparatus thinner is achieved by moving a part of a plurality of lens groups included in an optical system, for example, a focus lens, or the like, away from the optical axis.

However, in the constitution disclosed in Japanese Patent number 3809826, in order to avoid the so-called locked state of the nut (female screw) due to a control error of a focus motor that drives the focus lens, an idling region of the nut is provided, therefore an entire length of the lens barrel gets longer for the region when being stored, and therefore a thickness of an imaging apparatus increases.
In the constitution disclosed in Japanese Patent number 4433270, a space for placing a fixing member for fixing the front and back of the guide shaft is needed, and therefore a thickness of the lens barrel when being retracted and stored increases.
In the constitution disclosed in Japanese Patent Application Publication number 2002-162555, when an external force is applied to the focus lens or the focus lens holding frame due to dropping or the like, the lead screw and the rack do not move relatively, and are broken.
In the constitution disclosed in Japanese Patent Application Publication number 2008-15119, a mechanism for moving the focus lens or the like away from the optical axis is needed, and therefore the constitution becomes complex.

An object of the present invention is to provide a lens barrel that effectively avoids breaking when an external force is applied to the lens barrel due to dropping or the like and is capable of making the lens barrel thinner when being retracted and stored, and an imaging apparatus and an electronic device that are capable of being thinner by use of the lens barrel.

In order to achieve the above object, an embodiment of the present invention provides: a lens barrel that has a plurality of lens groups, and becomes a shooting state by moving at least a part of the plurality of the lens groups to an object side from a state of being retracted where at least a part of the plurality of the lens groups is retracted and stored, the lens barrel comprising: a plurality of lens holding frames that holds the plurality of lens groups per lens group, respectively; a movable lens cylinder that holds the plurality of the lens holding frames inside; a lens holding frame driver that drives at least a part of the plurality of the lens holding frames via the movable lens cylinder; a guide member that guides at least a part of movement along an optical axis direction of the plurality of the lens groups; a focus lens holding frame-that is included in the plurality of the lens holding frames, holds a focus lens system that performs focusing, and is guided by the guide member and moves along the optical axis direction; a focus motor that moves the focus lens system along the optical axis direction; an actuator frame that is guided by the guide member shared by the focus lens holding frame, engages with the focus motor, and is driven along the optical axis direction by an operation of the focus motor; and an urging member that is provided between the focus lens holding frame and the actuator frame, and urges the focus lens holding frame on an image plane side.

In order to achieve the above object, an embodiment of the present invention provides: a lens barrel that has a plurality of lens groups, and becomes a shooting state by moving at least a part of the plurality of the lens groups to an object side from a state of being retracted where at least a part of the plurality of the lens groups is retracted and stored, the lens barrel comprising: a plurality of lens holding frames that holds the plurality of lens groups per lens group, respectively; an aperture adjuster device that adjusts an opening diameter of an optical system of the plurality of the lens groups; a movable lens cylinder that holds the plurality of the lens holding frames and the aperture adjuster device inside; a lens holding frame driver that drives at least a part of the plurality of the lens holding frames via the movable lens cylinder; a guide shaft that guides at least a part of movement along an optical axis direction of the plurality of the lens groups; a focus lens holding frame that is provided as one of the plurality of the lens holding frames, and holds a focus lens system that performs focusing; a focus motor that moves the focus lens system along the optical axis direction; an actuator frame that shares the guide shaft inserted into the focus lens motor holding frame and into which the guided shaft is inserted, and that engages with the focus motor, and is driven along the optical axis direction on the guide shaft by an operation of the focus motor; and an urging member that is provided between the focus lens holding frame and the actuator frame, and urges the focus lens holding frame on an image plane side, wherein when performing focusing, the actuator frame is driven by the focus motor and moves in the optical axis direction, and the focus lens holding frame follows a movement of the actuator frame by the urging member and moves in the optical axis direction, and focusing is performed.

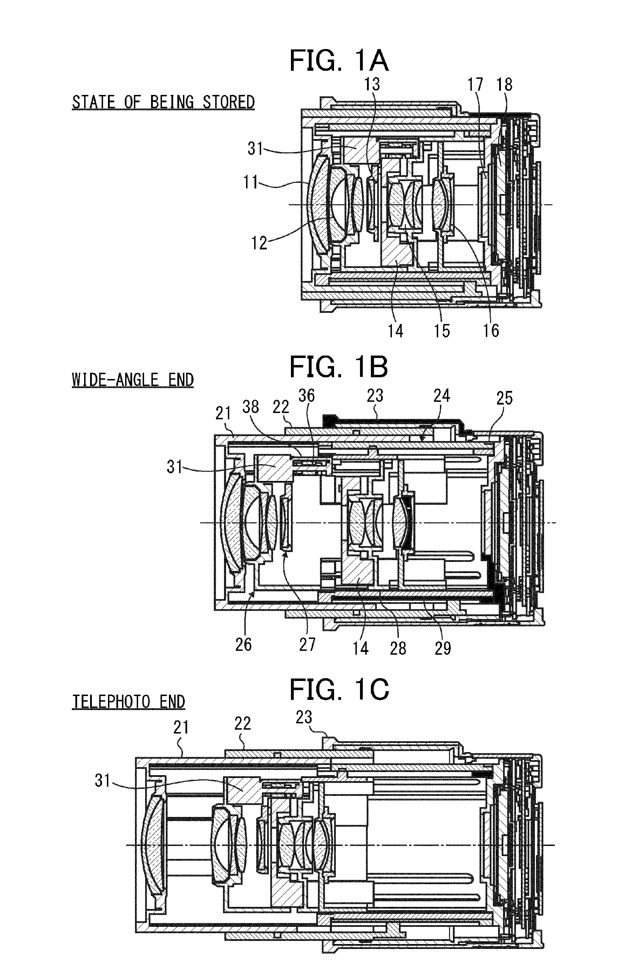

FIGs. 1A to 1C illustrate constitutions of a chief part of a lens barrel according to an embodiment of the present invention. FIG. 1A is a schematic longitudinal section diagram in a state of being retracted and stored. FIG. 1B is a schematic longitudinal section diagram when the lens barrel is at a wide-angle end (short focal length end) in a state of shooting. FIG. 1C is a schematic longitudinal section diagram when the lens barrel is at a telephoto end in a state of shooting.

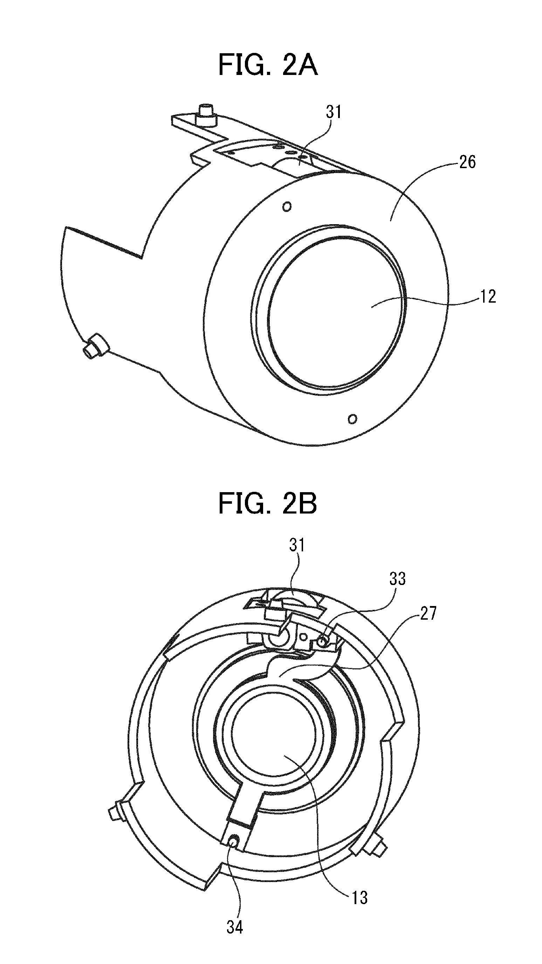

FIGs. 2A and 2B illustrate a detailed constitution of a second group lens system including a focus motor, a focus lens holding frame, and a rack holding frame (actuator frame) that is the chief part of the lens barrel in FIGs. 1A to 1C. FIG. 2A is a schematic perspective diagram seen from diagonally front (object side). FIG. 2B is a schematic perspective diagram seen from diagonally behind (image plane side).

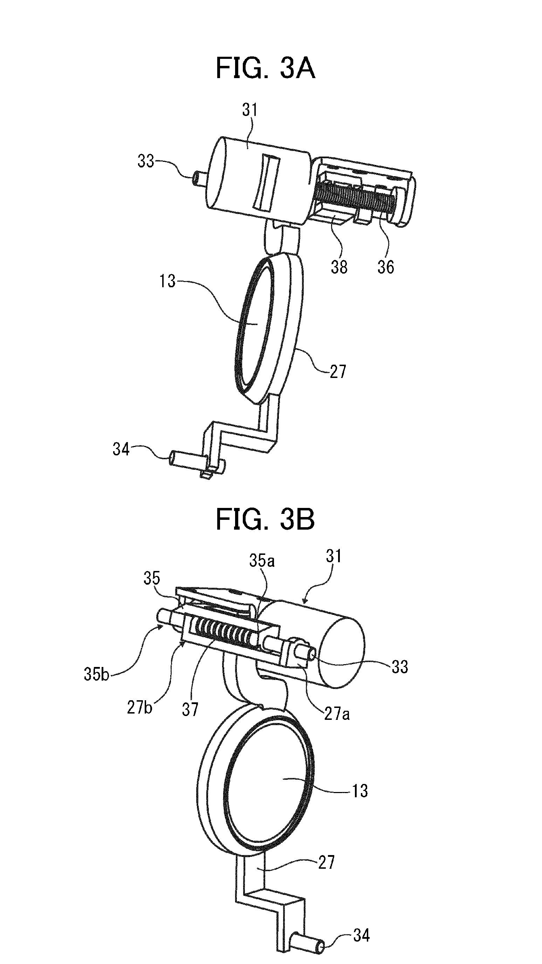

FIGs. 3A and 3B illustrate a detailed constitution of a part of the focus lens holding frame, the rack holding frame (actuator frame), the focus motor, and the rack that is a chief part in FIGs. 2A and 2B. FIG. 3A is a schematic perspective diagram seen from near the side. FIG. 3B is a schematic perspective diagram seen from diagonally front (object side).

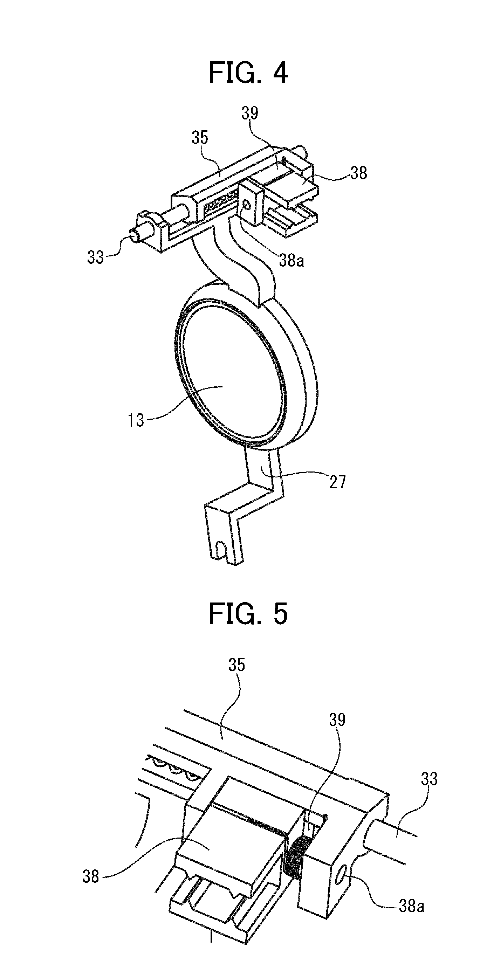

FIG. 4 is a schematic perspective diagram seen from diagonally front illustrating a detailed constitution of a part near the focus lens holding frame and the rack holding frame (actuator frame) that is a further chief part in FIGs. 3A and 3B.
FIG. 5 is a perspective diagram schematically illustrating a detailed constitution of a part near the rack holding frame (actuator frame) that is a further chief part in FIG. 4.

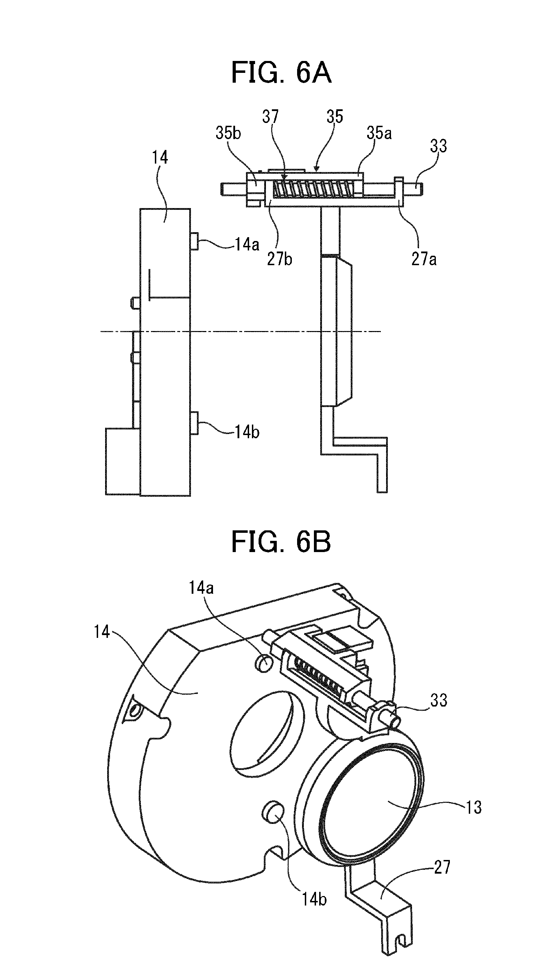

FIGs. 6A and 6B illustrate a detailed constitution of a part including the focus lens holding frame, the rack holding frame (actuator frame) and an aperture adjuster device that is the chief part of the lens barrel in FIGs. 1A to 1C in a state of photographing. FIG. 6A is a schematic cross-sectional diagram seen from the side. FIG. 6B is a schematic perspective diagram seen from diagonally front.

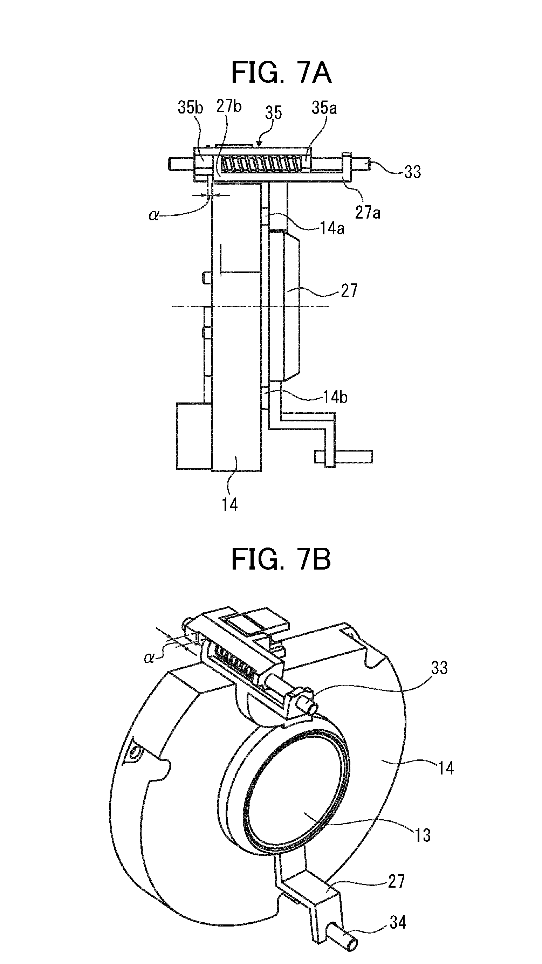

FIGs. 7A and 7B illustrate a detailed constitution of the part including the focus lens holding frame, the rack holding frame (actuator frame) and the aperture adjuster device that is the chief part of the lens barrel in FIGs. 1A to 1C in a state of being stored. FIG. 7A is a schematic cross-sectional diagram seen from the side. FIG. 7B is a schematic perspective diagram seen from diagonally front.

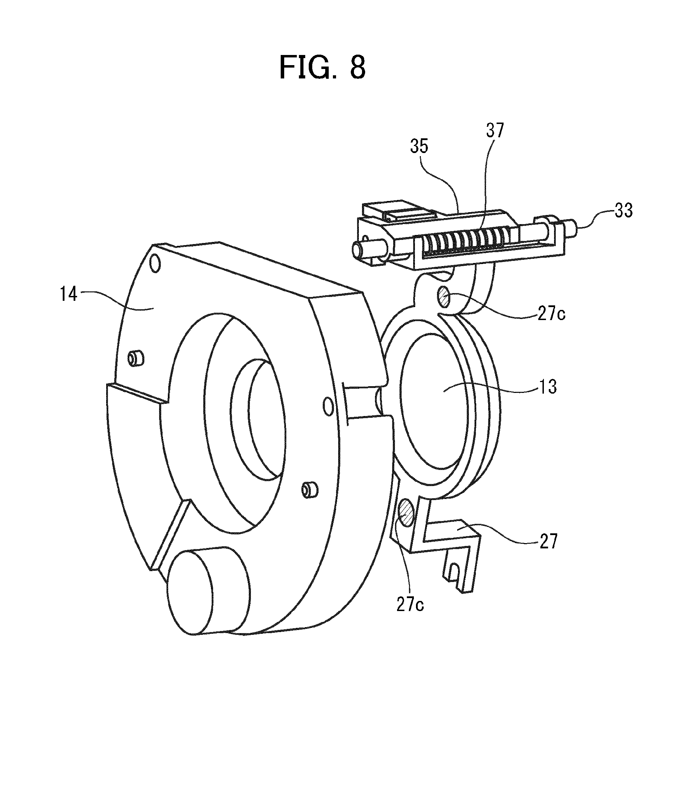

FIG. 8 is a schematic perspective diagram seen from diagonally behind (image plane side) illustrating a detailed constitution of a part including the focus lens holding frame, the rack holding frame (actuator frame) and the aperture adjuster device in FIGs. 6A and 6B in a state of photographing.

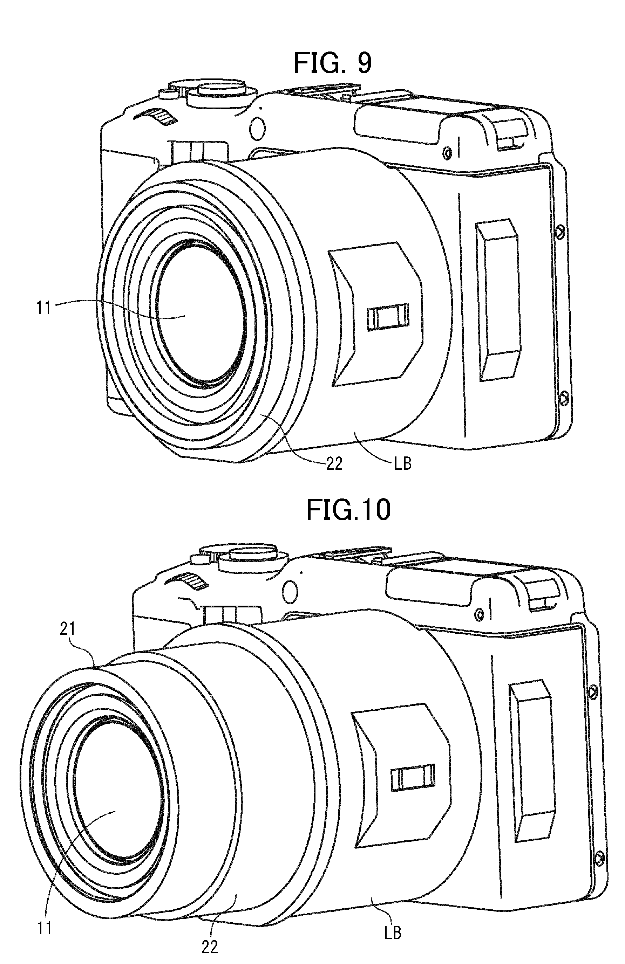

FIG. 9 is a schematic perspective diagram seen from diagonally front (object side) illustrating an exterior constitution in a state of being retracted and stored of a camera as the imaging apparatus constituted by use of the lens barrel in FIG. 1.
FIG. 10 is a schematic perspective diagram seen from diagonally front (object side) illustrating an exterior constitution in a state of photographing of the camera as the imaging apparatus in FIG. 9.

Hereinafter, based on an embodiment of the present invention, a lens barrel according to the embodiment of the present invention will be explained in detail with reference to the drawings.
FIGs. 1A to 8 illustrate a chief part of a lens barrel according to an embodiment of the present invention. In this case, the lens barrel is used as an imaging optimal system of an imaging apparatus, for example, a digital camera, and configures a core unit part of a camera including not only a lens system but also a body of the camera and an image sensor for image forming that are behind the lens system, that is, on an image plane side.
FIGs. 1A to 1C are schematic longitudinal section diagrams illustrating a chief part of the lens barrel according to the embodiment of the present invention in various states. FIG. 1A is a schematic longitudinal section diagram in a state of being retracted and stored. FIG. 1B is a schematic longitudinal section diagram when the lens barrel is at a wide-angle end (short focal length end) in a state of shooting. FIG. 1C is a schematic longitudinal section diagram when the lens barrel is at a telephoto end in a state of shooting.
FIGs. 2A and 2B are schematic perspective diagrams seen from two different directions illustrating a detailed constitution of a second group lens system unit including a focus motor, a focus lens holding frame, and a rack holding frame (actuator frame) that is the chief part of the lens barrel in FIGs. 1A to 1C. FIG. 2A is a schematic perspective diagram seen from diagonally front (object side). FIG. 2B is a schematic perspective diagram seen from diagonally behind (image plane side).

FIGs. 3A to 3B are schematic perspective diagrams seen from two different directions illustrating a detailed constitution of a part of the focus lens holding frame, the rack holding frame (actuator frame), the focus motor, and a rack that is a chief part of in FIGs. 2A and 2B. FIG. 3A is a schematic perspective diagram seen from near the side. FIG. 3B is a schematic perspective diagram seen from diagonally front (object side). FIG. 4 is a schematic perspective diagram seen from diagonally front illustrating a detailed constitution of a part near the focus lens holding frame and the rack holding frame (actuator frame) that is a further chief part in FIGs. 3A and 3B. FIG. 5 is a perspective diagram schematically illustrating a detailed constitution of a part near the rack holding frame (actuator frame) that is a further chief part in FIG. 4.
FIGs. 6A and 6B illustrate a detailed constitution of a part including the focus lens holding frame, the rack holding frame (actuator frame) and an aperture adjuster device that is the chief part of the lens barrel in FIGs. 1A to 1C in a state of shooting. FIG. 6A is a schematic cross-sectional diagram seen from the side. FIG. 6B is a schematic perspective diagram seen from diagonally front.
FIGs. 7A and 7B illustrate a detailed constitution of the part including the focus lens holding frame, the rack holding frame (actuator frame) and the aperture adjuster device that is the chief part of the lens barrel in FIGs. 1A to 1C in a state of being stored. FIG. 7A is a schematic cross-sectional diagram seen from the side. FIG. 7B is a schematic perspective diagram seen from diagonally front.
FIG. 8 illustrates a detailed constitution seen from diagonally behind (image plane side) of a part including the focus lens holding frame, the rack holding frame (actuator frame) and the aperture adjuster device in FIGs. 6A and 6B in a state of shooting.

The lens barrel illustrated in FIGs. 1A to 8 includes a first group lens system 11, a second group lens system 12, a third group focus lens system 13, an aperture adjuster device 14, a fourth group lens system 15, a fifth group lens system 16, a low-pass filter 17, an image sensor 18, a first group lens holding frame 21, a large rotating cylinder 22, a fixing frame 23, a small rotating cylinder 24, a fixing liner 25, a second group lens holding frame 26, a focus lens holding frame 27, a fourth group lens holding frame 28, a fifth group lens holding frame 29, a focus motor 31, a guide main shaft 33, a guide counter shaft 34, a rack holding flame 35, a lead screw 36, a compression spring 37, a rack 38, and a rack urging member 39.
As illustrated in FIGs. 1A to 1C, in the lens barrel, in order from an object side, the first group lens system 11, the second group lens system 12, the third group focus lens system 13, the aperture adjuster device 14, the fourth group lens system 15, the fifth group lens system 16, the low-pass filter 17, and the image sensor 18 are arranged on a common optical axis. The first group lens holding frame 21 holds the first group lens system 11, the second group lens holding frame 26 holds the second group lens system 12, the focus lens holding frame 27 holds the third group focus lens system 13, the fourth group lens holding frame 28 holds the fourth group lens system 15, and the fifth group lens holding frame 29 holds the fifth group lens system 16.

When the small rotating cylinder 24 is rotated around the optical axis by a drive device (not illustrated), the second group lens holding frame 26, the fourth group lens holding frame 28, and the fifth group lens holding frame 29 are moved along the optical axis direction by a cam groove provided on an inner circumferential surface of the small rotating cylinder 24. The large rotating cylinder 22 is rotated around the optical axis similarly to the small rotating cylinder 24; however, the large rotating cylinder 22 is moved along the optical axis direction by a helicoid groove provided on an inner circumferential surface of the fixing frame 23. In addition, a cam groove is also provided on an inner circumferential groove of the large rotating cylinder 22, and a cam follower provided so as to protrude on the outer circumferential surface of the first group lens holding frame 21 fits the cam groove, and the first group lens holding frame 21 is moved along the optical axis direction.
As illustrated in FIGs. 1A to 3B, in the second group lens holding frame 26, the focus motor 31 of a stepping motor is arranged, and the rack 38 fits the lead screw 36 rotation-driven by the focus motor 31, and the focus lens holding frame 27 and the third group focus lens system 13 are moved along the optical axis direction by stepping-driving the focus motor 31. In this case, the lead screw 36 is integrated with an output shaft of the focus motor 31, which is illustrated as the output shaft of the focus motor 31; however, it is not limited to such a constitution, and can be a constitution rotation-driven by the focus motor 31 via any drive transmitting mechanism.

As illustrated in FIGs. 1A to 1G, the aperture adjuster device 14 is fastened to the fourth group lens holding frame 28, and moves integrally with the fourth group lens holding frame 24 along the optical axis direction.
In FIGs. 2A to 8, arrangement of the guide main shaft 33 and the guide counter shaft 34 that guide the second group lens holding frame 26, the focus lens holding frame 27, the focus motor 31, and the focus lens holding frame 27 along the optical axis direction is illustrated.
In FIGs. 3A to 5, a part related to driving of the focus lens holding frame 27 is extracted and illustrated, and the rack 38 interlocks the lead screw 36 rotation-driven by the focus motor 31, The rack 38 is a rack gear, that is, a so-called linear gear, and interlocks the lead screw 36, and is driven along an axis direction of the lead screw 36 by rotation of the lead screw 36. However, the rack 38 may not always have many teeth in a linear fashion, and the teeth that engage (interlock) the lead screw 38 can be omitted in the middle of the rack 38 as illustrated in the drawings, and only two teeth at both ends can be arranged at a predetermined interval. Furthermore, the rack 38 may have equal to or more than three teeth by adding an appropriate number of teeth in the middle.

The rack 38 is supported rotatably by a supporting shaft 38a of the rack holding frame 35; however, for a so-called backlash removal, the rack 38 is urged by the rack urging member 39 in the direction parallel to the guide main shaft 33. In the focus lens holding frame 27 and the rack holding frame 35, two shaft bearing parts 27a and 27b, and two shaft bearing parts 35a and 35b are provided so as to protrude, respectively. The same guide main shaft 33 is inserted into each one of the shaft bearing parts 27a, 27b, 35a, and 35b. With respect to the guide main shaft 33, each one of the shaft bearing parts 27a and 27b of the focus lens holding frame 27 and each one of the shaft bearing parts 35a and 35b of the rack holding frame 35 are arranged alternately (that is, as seen from the object side, in the optical axis direction, the shaft bearing parts 27a, 27b, 35a, and 35b are arranged in a 27a-35a-27b-35b manner), and between inner shaft bearing parts 35a and 27b, the compression spring 37 is inserted and arranged. By an urging force of the compression spring 37, the shaft bearing part 27b of the focus lens holding frame 27 and the shaft bearing part 35b of the rack holding frame 35 are in close contact with each other, and by driving the focus motor 31, the focus lens holding frame 27 can be moved along the optical axis direction as intended (see FIG. 6A).
In FIGs. 6A to 7B, each of the relative positional relationships between the focus lens holding frame 27 and the aperture adjuster device 14 in a state of shooting and a state of being stored is illustrated. In the state of shooting illustrated in FIGs. 6A and 6B, the focus lens holding frame 27 and the aperture adjuster device 14 are separated, the shaft bearing part 27b of the focus lens holding frame 27 and the shaft bearing part 35b of the rack holding frame 35 are in close contact with each other, the rack holding frame 35 is moved along the optical axis direction by driving the focus motor 31, and a focusing operation is performed by the focus lens holding frame 27 following the movement of the rack holding frame 35.

In the state of being stored illustrated in FIGs. 7A and 7B, the focus lens holding frame 27 contacts with the aperture adjuster device 14 that is adjacent thereto. On a surface on a side of the focus lens folder frame 27 of the aperture adjuster device 14, a pair of projection parts 14a and 14b is provided as a contact part. When being stored, the focus lens holding frame 27 moves backward and the pair of projection parts 14a and 14b of the aperture adjuster device 14 contacts with the focus lens holding frame 27, and a contact position and a relative interval of the aperture adjuster device 14 and the focus lens holding frame 27 are regulated. The contact position of the focus lens holding frame 27 of the pair of projection parts 14a and 14b is a portion where the third group focus lens system 13 is not dislocated from the focus lens holding frame 27, and a position of the focus lens 13 is not displaced, even if a predetermined force amount is applied.
The contact part is a pair of projection parts made by a pair of bosses which is projected from at least one of the focus lens holding frame 27, an adjacent other lens holding frame (for example, the second group lens holding frame 26), or the aperture adjuster device 14. For example, it is the pair of projection parts 14a and 14b made by the pair of the bosses projected from the aperture adjuster device 14.
In the present embodiment, a pair of contact parts 27c, 27c as the contact part is provided in a portion facing a surface on a side of the aperture adjuster device 14 of the focus lens holding frame 27 as illustrated in FIG. 8. When the focus lens holding frame 27 further moves backward and the relative position of the aperture adjuster device 14 further moves forward to the side of the focus lens holding frame 27, a position of the rack holding frame 35 in the optical axis direction is not changed, and only the focus lens holding frame 27 moves relatively in the optical axis direction. Therefore, the shaft bearing part 27b of the focus lens holding frame 27 and the shaft bearing part 35b of the rack holding frame 35 are separated by only a distance α as illustrated in FIGs. 7A and 7B; however, relative positions of the rack 35 and the lead screw 36 are not displaced, and therefore the rack 35 is not damaged.

In addition, when an external force due to a drop impact or the like is applied to the first group lens holding frame 21, even if the large rotating cylinder 22 rotates and the lens barrel is retracted and forcibly in a state of being stored, the focus lens holding frame 27 comes into contact with the aperture adjuster device 14 similarly and moves relatively along the optical axis direction; however, the rack holding frame 35 does not move with respect to the lead screw 36, The rack holding frame 35 (rack 38) does not slide on the lead screw 36. Therefore, even if the rack 38 is at any position on the lead screw 36, it is possible to avoid breaking of the rack 38.
As described above, the rack holding frame 35 and the focus lens holding frame 27 are separated, and the same guide shaft 33 is shared, and the focus lens holding frame 27 follows the rack holding frame 35 by the compression spring 37 as the urging member. Due to the external force of the drop impact or the like with the lens barrel facing down, when the lens barrel is forcibly retracted, and the adjacent other lens holding frame (for example, the second group lens holding frame 26), or the aperture adjuster device 14 hits the focus lens holding frame 27, the rack holding frame 35 and the aperture adjuster device 14 are separated, therefore it is possible to avoid breaking the rack 38 part.
Additionally, the guide main shaft 33 shared by the focus lens holding frame 27 and the rack holding frame 35 is provided in the adjacent other lens holding frame (for example, the second group lens holding frame 26), or the aperture adjuster device 14, therefore it is possible to shorten the length of the guide main shaft 33 and achieve miniaturization.

Further, the focus lens holding frame 27 and the rack holding frame 35 have the shaft bearing parts 27a and 27b, and the shaft bearing parts 35a and 35b, respectively, each of which is separated in the optical axis direction. The guide main shaft 33 is alternately inserted into each one of the shaft bearing parts 27a and 27b of the focus lens holding frame 27 and each one of the shaft bearing parts 35a and 35b of the rack holding frame 35, and therefore, it is possible to stabilize a position in the optical axis direction of the third group focus lens system 13 and a position of the compression spring 37 as the urging member.
And furthermore, in the vicinity of a part holding the third group focus lens system 13 of the focus lens holding frame 27, a contact part that contacts the adjacent other lens holding frame (for example, the second group lens holding frame 26), or the aperture adjuster device 14 is provided, and therefore, it is possible to avoid breaking the lens barrel by a lens or a portion that is constitutionally weak contacting another portion, due to the external force of the drop impact or the like with the lens barrel facing down, when the lens barrel is forcibly retracted and the adjacent other lens holding frame (for example, the second group lens holding frame 26) or the aperture adjuster device 14 hits the focus lens holding frame 27.
As described above, the contact part is a pair of projection parts made by a pair of bosses which is projected from at least one of the focus lens holding frame 27, an adjacent other lens holding frame (for example, the second group lens holding frame 26), or the aperture adjuster device 14, For example, it is the pair of projection parts 14a and 14b made by the pair of the bosses projected from the aperture adjuster device 14. By providing such projection parts, it is possible to avoid damaging the third group focus lens system 13, the adjacent other lens (for example, the second group lens holding frame 26), or the aperture adjuster device 14.

Between the rack holding frame 35 and the rack 38, by performing the backlash removal by the rack urging member 39, the urging member to perform the backlash removal of the focus lens holding frame 27 is not needed, and therefore it is possible to miniaturize the entire lens barrel.
The compression spring 37 as the urging member arranged between the focus lens holding frame 27 and the rack holding frame 35 is placed concentrically with the guide main shaft 33, and placed in the center of each of the two bearing parts provided in each of the focus lens holding frame 27 and the rack holding frame 35, and therefore a space for another urging member to be provided is not needed, and it is possible to miniaturize the entire lens barrel.
In addition, the compression spring 37 is used as the urging member, and therefore a space for another urging member to be provided is not needed, and it is possible to further miniaturize the lens barrel.
Thus, the rack holding frame 35 and the focus lens holding frame 27 are separated, the same guide shaft 33 is shared, and the focus lens holding frame 27 follows the rack holding frame 35 by the compression spring 37 as the urging member, due to the external force of the drop impact or the like with the lens barrel facing down, when the lens barrel is forcibly retracted, and the adjacent other lens holding frame (for example, the second group lens holding frame 26), or the aperture adjuster device 14 hits the focus lens holding frame 27, the rack holding frame 35 and the aperture adjuster device 14 are separated, therefore it is possible to avoid breaking the rack 38 part.

Furthermore, since a state of being retracted and stored and a state of shooting are described in FIGs. 9 and 10, respectively, the above-described lens barrel LB can be provided as a shooting optical system, and an imaging apparatus such as a digital camera or the like can be constituted. In addition, an electronic device such as a portable digital assistant or the like having a similar imaging function can have the lens barrel as described above as an imaging optical system.

According to an embodiment of the present invention, it is possible to provide a lens barrel that is capable of effectively avoiding breaking when an external force is applied to the lens barrel due to dropping or the like, and being thinner when being retracted and stored, and an imaging apparatus and an electronic device that are capable of being thinner by use of the lens barrel.

According to an embodiment of the present invention, it is possible to buffer an impact between a focus lens holding frame and an actuator frame that moves the focus lens holding frame, accurately avoid breaking due to an external force applied to the lens barrel by dropping or the like, shorten the entire length of the lens barrel when being retracted and stored, and be thinner.

According to an embodiment of the present invention, in particular, it is possible to shorten a guide shaft shared by a focus lens holding frame and an actuator frame that moves the focus lens holding frame, and achieve miniaturization.
According to an embodiment of the present invention, in particular, it is possible to contrive a holding mechanism with respect to a guide shaft shared by the focus lens holding frame and the actuator frame, and stabilize a position of a focus lens.

According to an embodiment of the present invention, in particular, it is possible to regulate a contact position of a focus lens holding frame and an adjacent constitution, and avoid deterioration of performance due to an impact of constitutions adjacent to each other.
According to an embodiment of the present invention, in particular, it is possible to regulate a relative interval between the focus lens holding frame and an adjacent constitution, and avoid damage due to an impact of constitutions adjacent to each other.

According to an embodiment of the present invention, in particular, it is possible to have a backlash removal mechanism in an actuator device, and therefore the backlash removal is not necessary, and it is possible to achieve further miniaturization.
According to an embodiment of the present invention, in particular, it is possible to effectively arrange an urging member that urges the focus lens holding frame on the actuator frame, and make the lens barrel thinner.

According to an embodiment of the present invention, in particular, it is possible to have an urging member that effectively urges a focus lens holding frame on an actuator frame, and achieve further miniaturization.
According to an embodiment of the present invention, it is possible to effectively avoid breaking due to the external force applied to the lens barrel by dropping or the like, and use the lens barrel that is capable of shortening the entire length of the lens barrel when being retracted and stored, and make the lens barrel thinner.

Although the present invention has been described in terms of exemplary embodiments, it is not limited thereto. It should be appreciated that variations may be made in the embodiments described by persons skilled in the art without departing from the scope of the present invention as defined by the following claims.

## Claims

1. A lens barrel (LB) that has a plurality of lens groups (11, 12, 13, 15, 16), and becomes a shooting state by moving at least a part of the plurality of the lens groups to an object side from a state of being retracted where at least a part of the plurality of the lens groups is retracted and stored,
the lens barrel comprising:
a plurality of lens holding frames (21, 26, 27, 28, 29) that holds the plurality of lens groups per lens group, respectively;
a movable lens cylinder (22, 24) that holds the plurality of the lens holding frames inside;
a lens holding frame driver that drives at least a part of the plurality of the lens holding frames via the movable lens cylinder;
a guide member (33) that guides at least a part of movement along an optical axis direction of the plurality of the lens groups;
a focus lens holding frame (27) that is included in the plurality of the lens holding frames, holds a focus lens system (13) that performs focusing, and is guided by the guide member and moves along the optical axis direction;
a focus motor (31) that moves the focus lens system along the optical axis direction;
an actuator frame (35) that is guided by the guide member shared by the focus lens holding frame, engages with the focus motor, and is driven along the optical axis direction by an operation of the focus motor; and
an urging member (37) that is provided between the focus lens holding frame and the actuator frame, and urges the focus lens holding frame on an image plane side.

2. A lens barrel (LB) that has a plurality of lens groups (11, 12, 13, 15, 16), and becomes a shooting state by moving at least a part of the plurality of the lens groups to an object side from a state of being retracted where at least a part of the plurality of the lens groups is retracted and stored,
the lens barrel comprising:
a plurality of lens holding frames (21, 26, 27, 28, 29) that holds the plurality of lens groups per lens group, respectively;
an aperture adjuster device (14) that adjusts an opening diameter of an optical system of the plurality of the lens groups;
a movable lens cylinder (22, 24) that holds the plurality of the lens holding frames and the aperture adjuster device inside;
a lens holding frame driver that drives at least a part of the plurality of the lens holding frames via the movable lens cylinder;
a guide shaft (33) that guides at least a part of movement along an optical axis direction of the plurality of the lens groups;
a focus lens holding frame (27) that is provided as one of the plurality of the lens holding frames, and holds a focus lens system (13) that performs focusing;
a focus motor (31) that moves the focus lens system along the optical axis direction;
an actuator frame (35) that shares the guide shaft inserted into the focus lens motor holding frame and into which the guided shaft is inserted, and that engages with the focus motor, and is driven along the optical axis direction on the guide shaft by an operation of the focus motor; and
an urging member (37) that is provided between the focus lens holding frame and the actuator frame, and urges the focus lens holding frame on an image plane side,
wherein when performing focusing, the actuator frame is driven by the focus motor and moves in the optical axis direction, the focus lens holding frame follows a movement of the actuator frame by the urging member and moves in the optical axis direction, and focusing is performed.

3. The lens barrel according to Claim 2, wherein the guide shaft (33) is provided in one of the plurality of the lens holding frames (21, 26, 27, 28, 29) and the aperture adjuster device (14), which is adjacent to the focus lens holding frame (27).

4. The lens barrel according to Claim 2 or Claim 3, wherein the focus lens holding frame (27) has two shaft bearing parts (27a, 27b) that are separated in the optical axis direction, and the actuator frame (35) has two shaft bearing parts (35a, 35b) that are separated in the optical axis direction, and the guide shaft (33) is inserted alternately into each one of the two shaft bearing parts of the focus lens holding frame and each one of the two shaft bearing parts of the actuator frame.

5. The lens barrel according to Claim 4, wherein the focus lens holding frame (27) has a contact part that comes into contact with one of other lens holding frames (21, 26, 28, 29) of the plurality of the lens holding frames (21, 26, 27, 28, 29) and the aperture adjuster device (14), which is adjacent to the focus lens holding frame, and the contact part is in a vicinity of a portion that holds the focus lens (13).

6. The lens barrel according to Claim 5, wherein the contact part is at least a pair of projection parts of a pair of projection parts projected from the focus lens holding frame (27), and a pair of projection parts projected from the other lens holding frames (21, 26, 28, 29) or a pair of projection parts projected from the aperture adjuster device (14), which is adjacent to the focus lens holding frame.

7. The lens barrel according to any one of Claims 1 to 6, further comprising:
a lead screw (36);
a rack (38); and
a rack urging member (39),
wherein the actuator frame (35) locks the rack that engages with the lead screw rotation-driven by the focus motor (31), and in which a backlash removal is performed on the rack by the rack urging member (39).

8. The lens barrel according to Claim 4, wherein the urging member (37) provided between the focus lens holding frame (27) and the actuator frame (35) is arranged between two inner shaft bearing parts of each one of the two shaft bearing parts (27a, 27b) of the focus lens holding frame (27) and each one of the two shaft bearing parts (35a, 35b) of the actuator frame (35) into which the guide shaft (33) is alternately inserted.

9. The lens barrel according to Claim 8, wherein the urging member (37) is a compression spring (37).

10. An imaging apparatus comprising: a lens barrel (LB) according to any one of Claims 1 to 9 that is included in an imaging optical system.

11. An electronic device having an imaging function comprising: a lens barrel (LB) according to any one of Claims 1 to 9 that is included in an imaging optical system.
